# EUROPÄISCHE PATENTANMELDUNG

(11) **EP 0 928 924 A2**
(43) Veröffentlichungstag der Anmeldung: **14.07.1999**
(21) Anmeldenummer: 99100414.4
(22) Anmeldetag: 11.01.1999
(51) Int. Cl.: F17C 13/02

(54) **Verfahren und Kontrollarmatur zum Messen, Kontrollieren und Auswerten physikalischer Parameter von im Kreislauf geführten gasförmigen und/oder flüssiggasförmigen Druckmedien**

(30) Priorität: 13.01.1998 DE 19800854
(71) Anmelder: BKM Kältemachanik Bobbau GmbH, 06766 Wolfen (DE)
(72) Erfinder: Behrends, Peter, 06766 Bobbau (DE); Hinkelmann, Lars, 06766 Wolfen (DE)
(74) Vertreter: Tragsdorf, Bodo, Dipl.-Ing.

(57) **Zusammenfassung**

Die Erfindung betrifft ein Verfahren zum Messen, Kontrollieren und Auswerten physikalischer Parameter von im Kreislauf geführten gasförmigen und/oder flüssiggasförmigen Druckmedien sowie die dazugehörige Kontrollarmatur.

Ausgehend von den Nachteilen der bekannten Verfahrensweisen mittels Monteurhilfen soll ein Verfahren geschaffen werden, das in sehr kurzer Zeit und mit hoher Genauigkeit die zum dem gemessenen Druck zugehörige Verdampfungs- oder Kondensationstemperatur für eine Vielzahl an Kältemittel ermittelt und die Meßdaten auswertet. Ferner soll das Verfahren für weitere wichtige Messungen von Temperatur- und/oder Druckwerten sowie für Prüfzwecke geeignet sein.

Hierzu wird vorgeschlagen, daß
a) die Kenndaten der Kältemittel als Konstanten der Zustandsgrößen kritische Temperatur, kritische Dichte und kritischer Druck einschließlich der dazugehörigen Korrekturfaktoren und/oder in Form sämtlicher Temperatur- und Druckwerte der Sattdampftafel elektronisch in der Kontrollarmatur gespeichert werden, und
b) an Hand der gespeicherten Kenndaten für die Kältemittel und der gemessenen Drücke mittels eines in der Kontrollarmatur befindlichen Mikroprozessors die zu den gemessenen Drücken zugehörigen Verdampfungs- oder Kondensationstemperaturen berechnet oder ausgewählt werden.

## Beschreibung

Die Erfindung betrifft ein Verfahren zum Messen, Kontrollieren und Auswerten physikalischer Parameter von im Kreislauf geführten gasförmigen und/oder flüssiggasförmigen Druckmedien und/oder Kältemitteln sowie die dazugehörige Kontrollarmatur.

In vielen Bereichen der Technik, beispielsweise der Kältetechnik, ist es notwendig, unter Druck stehende Medien, wie Kälte- und Kühlmittel, zu überwachen, die Daten zu beurteilen und dabei zumindest zeitweilig die Strömungswege des geschlossenen Systems zu ändern zu erweitern oder umzuleiten, wofür das Manometer und im besonderen für den Kälteanlagenbauer die Monteurhilfe das übliche Instrument ist. In der Kältetechnik, etwa für das Befüllen von Anlagen, die Kontrolle oder für verschiedenste Einstell-Reparaturaufgaben, werden Kontrollarmaturen, die mit Manometern ausgerüstet sind, sogenannte Monteurhilfen, verwendet. Die Manometer sind neben einer Skala für relativen Druck mit wenigstens einer Temperaturskala ausgestattet, wobei der Drucknullpunkt bei etwa 1000 mbar (Normalluftdruck) und 0 Bar Absolutdruck mit -1 bar gekennzeichnet ist. Diese Temperaturskalen sind dem Druck im entsprechenden Verhältnis der Verdampfungs- bzw. Kondensationstemperatur des jeweiligen Kältemittels zugeordnet.
Solche Kontrollarmaturen sind unter den Begriffen 2-Wege- und 4-Wege-Monteurhilfe oder Mano-Vac-Monteurhilfe bekannt.
Derartige Kontrollarmaturen sind z.B. in den Druckschriften EP 0 293 799 A1 und EP 0 480 220 A1 beschrieben. Die Kontrollarmatur weist einen Anschluß für die Niederdruckseite und einen Anschluß für die Hochdruckseite der zu prüfenden Anlage auf. Die Anschlüsse sind mittels Ventilen absperrbar und über einen Stutzen mit jeweils einem Manometer verbunden. Die beiden Anschlüsse stehen miteinander absperrbar in Verbindung, wobei in die Verbindungsleitung ein weiterer Stutzen mit einem Ventil und einem Vakuum-Manometer eingebunden werden kann, die über eine Abzweigleitung mit einem Vorratsbehälter zum Umfüllen des Mediums in das Kreislaufsystem und einer Vakuumpumpe verbunden sind.

Der Nachteil dieser Monteurhilfen besteht vor allem darin, daß diese in ihrer Anwendung für den Monteur sehr umständlich sind und die Gefahr von Ablese- und/oder nachfolgenden Umrechnungsfehlern nicht auszuschließen ist. Unter Berücksichtigung der Vielzahl am Markt befindlicher Kältemittel nimmt diese Gefahr zu. Der Einsatz neuer Kältemittel erfordert entweder die Anschaffung neuer Kontrollarmaturen oder den Umbau der bereits vorhandenen.
Auch das in der EP 760 470 A2 beschriebene Manometer, bei dem auf das Manometergehäuse eine transparente Scheibe mit einer Druckskala mit zuordenbarer Temperaturskala für ein vorgegebenes Kältemittel aufgedrückt werden kann, stellt für das vorgenannte Problem keine befriedigende Lösung dar.

Der Erfindung lag die Aufgabe zugrunde, ein Verfahren zu schaffen, das in sehr kurzer Zeit und mit hoher Genauigkeit die zu dem gemessenen Druck zugehörige Verdampfungs- oder Kondensationstemperatur für eine Vielzahl an Kältemittel ermittelt und die Meßdaten auswertet. Ferner soll das Verfahren für weitere wichtige Messungen von Temperatur- und/oder Druckwerten sowie für Prüfzwecke geeignet sein.
Außerdem soll eine geeignete Kontrollarmatur zur Durchführung des Verfahrens geschaffen werden.

Erfindungsgemäß wird die Aufgabe durch die in den Ansprüchen 1 und 16 angegebenen Merkmale gelöst. Entsprechende Ausgestaltungsvarianten sind in den Ansprüchen 2 bis 15 und 17 bis 22 angegeben.
Mit der vorgeschlagenen Verfahrensweise und der zur Durchführung des Verfahrens geeigneten Kontrollarmatur ist ein direktes Erfassen der druckabhängigen Verdampfungs- und Kondensationstemperatur der zu prüfenden Anlage bzw. des Kältermittelkreislaufes für eine Vielzahl an Kältemitteln innerhalb kürzester Zeit, in wenigen Sekunden, möglich. Dem Monteur stehen bis zu 50 bekannte Kältemittel, deren Kenndaten im Speicher der Kontrollarmatur eingelesen sind, zur Verfügung. Werden neue Kältemittel auf dem Markt eingeführt, so können deren Kenndaten ebenfalls abgespeichert werden, so daß die Kontrollarmatur auch für die neuen Kältemittel einsetzbar ist. Sollte die Speicherkapazität für die Kältemittel nicht mehr ausreichen, so kann der Monteur die Kenndaten für nicht mehr benötigte Kältemittel löschen. Zum Einlesen und Löschen der Kenndaten für die Kältemittel wird die Kontrollarmatur an einen Personalcomputer angeschlossen. Für den Monteur bzw. Bediener sind somit die Voraussetzungen für eine fehlerfreie Arbeitsweise zur Ermittlung der druckabhängigen Temperaturen geschaffen.

Durch die Verfahrensweise, daß
a) die Kenndaten der Kältemittel als Konstanten der Zustandsgrößen kritische Temperatur, kritische Dichte und kritischer Druck einschließlich der dazugehörigen Korrekturfaktoren und/oder in Form sämtlicher Temperatur- und Druckwerte der Sattdampftafel elektronisch in der Kontrollarmatur gespeichert, und
b) an Hand der gespeicherten Kenndaten für die Kältemittel und der gemessenen Drücke mittels eines in der Kontrollarmatur befindlichen Mikroprozessors die zu den gemessenen Drücken zugehörigen Verdampfungs- oder Kondensationstemperaturen berechnet oder ausgewählt werden,
werden sehr genaue und zuverlässige Meßwerte für die jeweiligen Verdampfungs- und Kondensationstemperaturen erhalten. Die Berechnung bzw. Auswahl der Temperaturwerte erfolgt mittels der auf dem Mikroprozessor installierten Software. Bei der Auswahl der Temperaturwerte an Hand der Kenndaten der gespeicherten Werte der Sattdampftafel werden Zwischenwerte innerhalb von 1°-Schritten durch Interpolation ermittelt. Im Display werden gleichzeitig beide Temperaturwerte unter den jeweiligen Drücken angezeigt. Die Daten werden durch den Mikroprozessor nach Glättung möglicher Pulsationen derart an das LCD-Display übergeben, daß jederzeit, auch bei schnell wechselnden Werten eine klare Erkennbarkeit gegeben ist, was durch Filtern und Mittelwertbildung sowie durch Steuern der Wiederholrate erreicht wird. Die Kontrollarmatur weist eine sehr gute Langzeitstabilität der angegeben Genauigkeitsklasse auf. Alle vom Bediener vorgenommenen Einstellungen werden im Klartext im Display angezeigt, so daß für die Bedienung der Kontrollarmatur keine gesonderte Anleitung erforderlich ist.
Von besonderem Vorteil ist, daß entsprechend der Ausgestaltung der Verfahrensweise mit der Kontrollarmatur auch weitere für den Kälteanlagenbauer wichtige Messungen und Prüfungen durchgeführt werden können, die bisher den Einsatz zusätzlicher Meß- und Prüfgeräte erforderten. So können mit der Kontrollarmatur Vakuummessungen für den jeweiligen Kältekreislauf durchgeführt werden. Durch die automatische Anzeige der Dampftemperatur für Wasser zu dem gemessenen Druck kann der Monteur aufgrund des Vergleiches mit der Umgebungstemperatur feststellen, ob der erreichte Unterdruck tatsächlich für das Evakuieren und Trocknen des Kältekreislaufes ausreicht. Durch Druckmessungen oder der Erzeugung von Überdrücken, z.B. mittels Stickstoff, können mittels der angeschlossenen Kontrollarmatur auch Dichtheitsprüfungen der kältetechnischen Anlagen durchgeführt werden. Im Rahmen der Untermenüs der Programmabläufe kann z.B. durch Anwählen des Menüpunktes "Stickstoff" eine Dichtheitsprüfung der Anlage durchgeführt werden, wobei die gemessenen Werte angezeigt und abgespeichert werden. Infolge des Einsatzes neuer Kältemittel und deren stofflicher Eigenschaften ist es aus Umweltgründen besonders von Bedeutung, daß die Anlagen keine Undichtheiten aufweisen. Dichtheitsprüfungen sind somit in bestimmten Zeitintervallen unerläßlich und können nunmehr mittels der Kontrollarmatur durchgeführt werden. Außerdem können mit der Kontrollarmatur noch weitere wichtige Messungen erfolgen, wie eine zusätzliche Temperaturmessung mittels eines externen Fühlers vom Typ K, der über einen gesonderten Anschluß an der Kontrollarmatur mit dieser verbunden wird.
Neben der Messung der Temperatur an einer bestimmten Stelle des Kältemittelkreislaufes kann dann parallel noch der Druck an einem der Anschlüsse der Niederdruck- oder Hochdruckseite gemessen werden und die dazugehörige Verdampfungs- oder Kondensationstemperatur ermittelt werden. Die Werte werden in der LCD-Anzeige angezeigt. Insbesondere die Kenntnis der tatsächlichen Temperatur des Kältemittels ist neben den Drücken und der dazugehörigen Temperatur für den Monteur, insbesondere bei Kontroll- und Einstellungsaufgaben an kältetechnischen Anlagen, von großer Wichtigkeit.
Die an den Anschlüssen der Niederdruck- und der Hochdruckseite der Kontrollarmatur installierten Druckmeßwertaufnehmer besitzen eine Druckfestigkeit von 60 bar, so daß es bei einem versehentlich verkehrten Anschließen der Kontrollarmatur zu keinen Defekten oder Störungen kommt.
Die Kontrollarmatur kann als stationäres oder mobiles Gerät ausgebildet sein. Alle im Display der Kontrollarmatur angezeigten Daten werden im Speicher der Kontrollarmatur abgespeichert und können jederzeit abgerufen werden. Es besteht auch die Möglichkeit, die Daten den jeweiligen Anlagen und/oder Kunden zeitrelevant zuzuordnen. Für den Bediener ist es auch von Vorteil, daß dieser während des Betriebszustandes der Kontrollarmatur durch einen Tastendruck auf die Manometertaste sofort wieder in den Ausgangsstatus der Druckmessung zurückgelangen kann. Über den gesonderten Anschluß an der Kontrollarmatur für externe Temperatur- oder Druckmeßwertaufnehmer kann die Kontrollarmatur an einen Personalcomputer angeschlossen werden. Neue Kontrollarmaturen werden somit über den PC initialisiert, den Anforderungen des Bedieners angepaßt und in die Geräteverwaltung einbezogen. Außerdem werden in den Speicher der Kontrollarmatur die erforderlichen Kenndaten der Kältemittel eingelesen. Zu einem späteren Zeitpunkt kann dann nach einer vorbestimmten Betriebszeit die Kontrollarmatur erneut an den PC angeschlossen werden, um die im Speicher der Kontrollarmatur befindlichen Meßdaten auf den PC zu übertragen. Die Meßdaten können als Datenverwaltung oder Datenübersicht ausgewertet und in tabellarischer oder grafischer Form ausgedruckt werden. Während des Anschlusses der Kontrollarmatur an den PC können auch nicht mehr benötigte Daten im Speicher der Kontrollarmatur gelöscht werden. An Hand der für den Bediener möglichen vielfältigen Auswertungen der Meßdaten ist es möglich, zuverlässige Aussagen über den jeweiligen Betriebszustand der Anlage zu machen. Die Daten können in der jeweils aufbereiteten Form im PC abgespeichert werden. Die in der Kontrollarmatur installierte Software ist für Anwendungen unter dem Betriebssystem Windows bestimmt, so daß nach der Übergabe der Meßdaten an den PC auch die Meßdaten nach anderen Windows-Anwendungen bearbeitet werden können.

Die Erfindung soll nachstehend erläutert werden. In der zugehörigen Zeichnung zeigen
- Fig. 1: eine Kontrollarmatur für den mobilen Einsatz als Vorderansicht,
- Fig. 2: die Seitenansicht der Kontrollarmatur gemäß Fig. 1,
- Fig. 3: einen Schnitt gemäß der Linie A-A in Fig. 2,
- Fig. 4: einen externen Druckmeßwertaufnehmer für Vakuummessungen als Seitenansicht,
- Fig. 5: die Vorderansicht einer Kontrollarmatur für den stationären Einsatz,
- Fig. 6: das Blockschaltbild für die Hardware der Kontrollarmatur,
- Fig. 7: das Programmablaufschema der Kontrollarmatur gemäß Fig. 1 und
- Fig. 8: das Programmablaufschema nach dem Anschluß der Kontrollarmatur an einen PC.

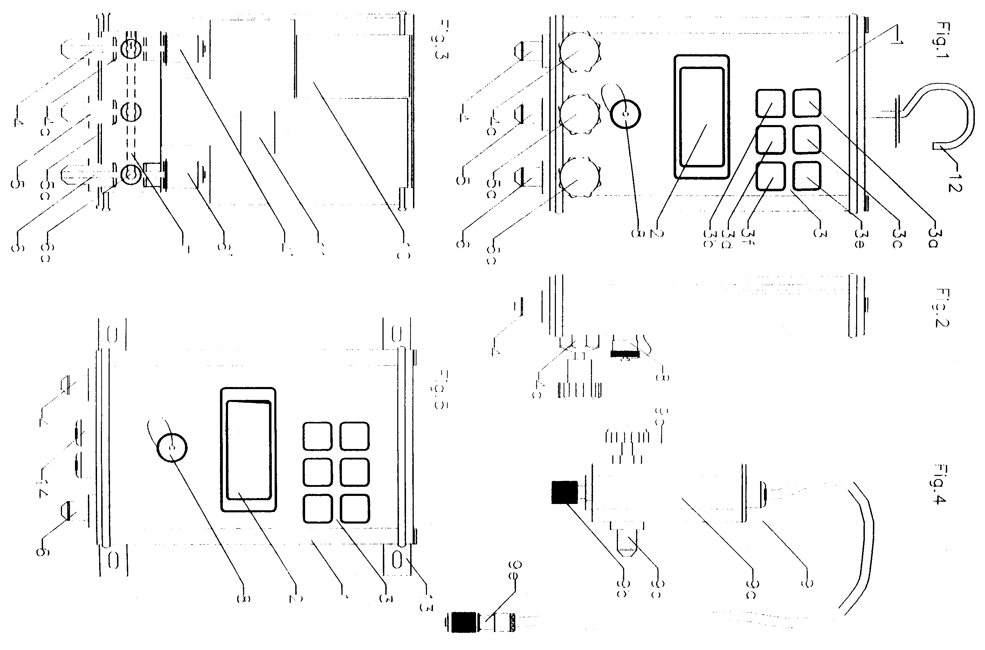

Die in Figur 1 dargestellte Kontrollarmatur besteht aus einem bruchfesten Gehäuse 1, das elektromagnetisch verträglich mit einem Schutzgrad von IP 65 ausgerüstet ist, einer zweizeiligen LCD-Anzeige 2, einer Bedientastatur 3 sowie den Anschlüssen 4, 5 und 6 für die Kältemittelfüllschläuche. Die Kontrollarmatur wird in an sich bekannter Weise wie die Monteurhilfe mit dem Anschluß 4 an die Niederdruckseite und dem Anschluß 6 an die Hochdruckseite der zu prüfenden Anlage angeschlossen. Die Anschlüsse 4 und 6 sind mit entsprechenden Stutzen verbunden, in denen die Absperrventile 4a und 6a angeordnet sind. Die Anschlüsse 4 und 6 stehen außerdem jeweils mit einem Druckmeßwertaufnehmer 4' bzw. 6' in Verbindung. Die Druckmeßwertaufnehmer 4' und 6' besitzen eine hohe Druckfestigkeit von 60 bar, so daß bei einem versehentlich verkehrten Anschluß keine Störungen auftreten können.

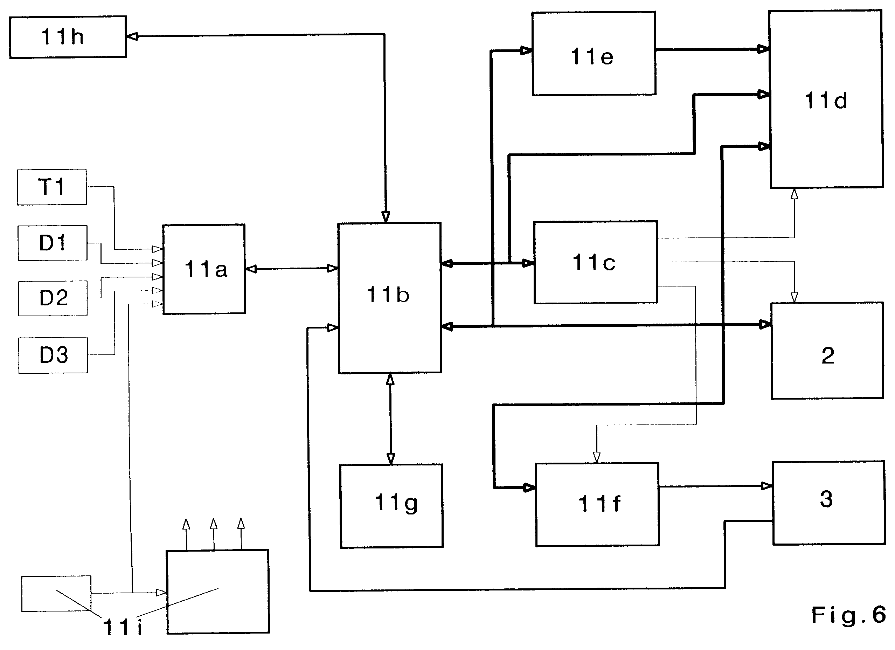

Der Anschluß 5, der über eine Leitung mit einer Sammelflasche, Evakuierungsstation oder Vakuumpumpe verbunden werden kann, ist ebenfalls mit einem Absperrventil 5a verbunden. Die einzelnen Anschlüsse 4, 5 und 6 sind über einen Strömungskanal 7 miteinander verbunden. Durch das jeweilige Öffnen und Schließen der Ventile 4a, 5a und 6a ergeben sich innerhalb der Kontrollarmatur drei Strömungswege für den Gas- oder Flüssigkeitsstrom.
Die Kontrollarmatur besitzt noch einen weiteren Anschluß 8, der wahlweise für verschiedene Anschlußmöglichkeiten genutzt werden kann, wie für den Anschluß eines externen Druckmeßwertaufnehmers 9 oder Temperaturfühler vorn Typ K oder als Schnittstelle für den Anschluß an einen PC. Der Anschluß 8 ist mit einer dafür geeigneten Buchse versehen, in die die erforderlichen Anschlußkabel der Druckmeßwertaufnehmer, Temperaturfühler oder des PC gesteckt werden.
Ein geeigneter Druckmeßwertaufnehmer 9, der an den Anschluß 8 angeschlossen wird, ist in der Figur 4 gezeigt. Dieser Druckmeßwertaufnehmer 9 ist in einem Edelstahlgehäuse 9a installiert, das mit zwei Anschlüssen 9b und 9c für die Füllschläuche versehen ist. Der Anschluß 9b ist über einem Stutzen mit einem Ventil 9d verbunden. Bei geöffnetem Ventil 9d stehen die beiden Anschlüsse 9b und 9c miteinander in Verbindung. Der Anschlußstutzen des Anschlusses 9b wird entweder an den dafür vorgesehenen Meßstutzen des zu kontrollierenden Kreislaufs oder Behälters oder an den Anschluß 5 der Kontrollarmatur angeschlossen. Der Anschluß kann entweder direkt oder über zwischengeschaltete Füllschläuche erfolgen. An den zweiten Anschluß 9c wird die Vakuumpumpe angeschlossen. An dem Anschlußkabel 9e befindet sich ein Stecker, der in die Buchse des Anschlusses 8 der Kontrollarmatur gesteckt wird.
Die notwendige Stromversorgung der elektronischen Bauelemente 11 erfolgt mittels einer Batterie 10 (Fig. 3). An der oberen Stirnseite des Gehäuses 1 der mobilen Kontrollarmatur ist ein Haken 12 zum Anhängen der Kontrollarmatur befestigt. Die Verbindung zwischen den Meßstutzen der zu prüfenden Anlage und den Anschlußstutzen 4 und 6 erfolgt über flexible Leitungen.
Die in der Fig. 5 gezeigte Kontrollarmatur ist für einen stationären Einsatz bestimmt. Infolge des festen Einbaus dieser Kontrollarmatur in den Kreislauf der zu prüfenden Anlage besitzt diese lediglich einen Anschluß 4 für die Niederdruckseite und einen Anschluß 6 für die Hochdruckseite. Die Anschlüsse 4 und 6 stehen jeweils mit einem Druckmeßwertaufnehmer 4' bzw. 6' in Verbindung, analog wie bei der in Figur 2 gezeigten Darstellung der mobilen Kontrollarmatur. Im Vergleich zu der mobilen Kontrollarmatur werden keine Absperrventile und somit auch keine Verbindungsleitung zwischen den beiden Anschlüssen 4 und 6 benötigt. Die Stromversorgung für die stationäre Kontrollarmatur erfolgt über das örtliche Versorgungsnetz. Am Gehäuse 1 sind geeignete Befestigungsschellen 13 angebracht. Die während des Meßvorganges entstehenden analogen Signale können über zwei getrennte Signalleitungsanschlüsse 14 an ein externes Gerät übertragen werden. Ansonsten bestehen im prinzipiellen Aufbau zwischen der mobilen und der stationären Kontrollarmatur keine Unterschiede. Wesentliches Kernstück beider Kontrollarmaturen ist die elektronische Baugruppe 11, die im folgenden unter Bezugnahme auf die Figur 6 im Zusammenhang mit der weiteren Hardware näher erläutert wird.
Die an den Anschlußstellen 4, 6 installierten Druckmeßwertaufnehmer 4', 6' oder an dem Anschluß 8 angeschlossenen externen Temperatur- oder Druckmeßwertaufnehmer 9 liefern die elektrischen Signale T₁ bzw. D₁, D₂, D₃, die einem Analog/Digitalwandler 11a zugeführt und in diesem digitalisiert und an den Mikroprozessor 11b, auf dem die erforderliche Software für die einzelnen Operationen installiert ist, weitergeleitet werden. Der Mikroprozessor 11b ist mit der Tastatur 3 verbunden, die wie in Figur 1 gezeigt, aus folgenden Eingabetasten besteht, der ON/OFF-Taste 3a, der MODE-Taste 3b, der Pfeiltaste "vorwärts" 3c, der Pfeiltaste "rückwärts" 3d, der Manometer-Taste 3e und der Enter-Taste 3f. Auf die durch die einzelnen Tasten auslösbaren Vorgänge wird noch gesondert eingegangen. An den Mikroprozessor 11b ist die LCD-Anzeige 2 angeschlossen. Der Mikroprozessor 11b ist über einen programmierbaren Logik-Baustein 11c mit dem Programm- und Datenspeicher 11d verbunden. Außer den Programmen und Meßwerten sind in diesem die Kenndaten von bis zu 50 Kältemitteln gespeichert, entweder als Konstanten der physikalischen Größen kritische Temperatur, kritische Dichte und kritischer Druck sowie der dazugehörigen Korrekturfaktoren und/oder als Temperatur- und Druckwerte der Sattdampftafel der einzelnen Kältemittel. So können z.B. für ein Kältemittel die Kenndaten als Konstanten der physikalischen Größen und für ein anderes Kältemittel als Temperatur- und Druckwerte der Sattdampftafel abgespeichert sein. Liegen die Kenndaten als Konstanten vor, so wird ausgehend von der installierten Software vom Mikroprozessor 11b die zu dem gemessenen Druck zugehörige Verdampfungs- oder Kondensationstemperatur für das in der zu prüfenden Anlage befindliche Kältemittel nach der jeweiligen thermischen Zustandsgleichung für das Kältemittel bestimmt. Sind die Temperatur- und Druckwerte der Sattdampftafel abgespeichert, so wird ausgehend von einer anderen Software vom Mikroprozessor 11b die zu den gemessenen Druckwerten zugehörige Verdampfungs- oder Kondensationstemperatur ausgewählt, wobei Zwischenwerte innerhalb von 1°-Schritten durch Interpolation ermittelt werden. Der Programm- und Datenspeicher 11d ist außerdem mit einem Adreßbuslatch 11e, dem programmierbaren Logik-Baustein 11c und einem Ausgabeport 11f verknüpft, die vom Mikroprozessor 11b gesteuert werden, und zur Zuordnung von Kunden- und/oder Anlagedaten dienen. An den Mikroprozessor 11b ist eine Echtzeituhr 11g angeschlossen, um alle Daten zeitrelevant über den Adreßbuslatch 11c dem jeweiligen Kunden und/oder der Anlage zuzuordnen. Über eine Schnittstelle 11h des Mikroprozessors 11b kann die Kontrollarmatur an einen PC angeschlossen werden, über den bereits erwähnten Anschluß 8. Die erforderliche Installation erfolgt dann mittels eines Schnittstellentreibers. Die Stromversorgung 11i der Hardware erfolgt entweder über eine 9V-Batterie für die mobile Kontrollarmatur oder über die örtliche zentrale Stromversorgung für die stationäre Kontrollarmatur. Bei der Stromversorgung mittels Batterie wird die Betriebsspannung überwacht und die noch vorhandene Batteriekapazität im Display 2 angezeigt, wenn durch die Pfeiltaste 3d die Funktion "Aufzeichnen" aufgerufen wird.

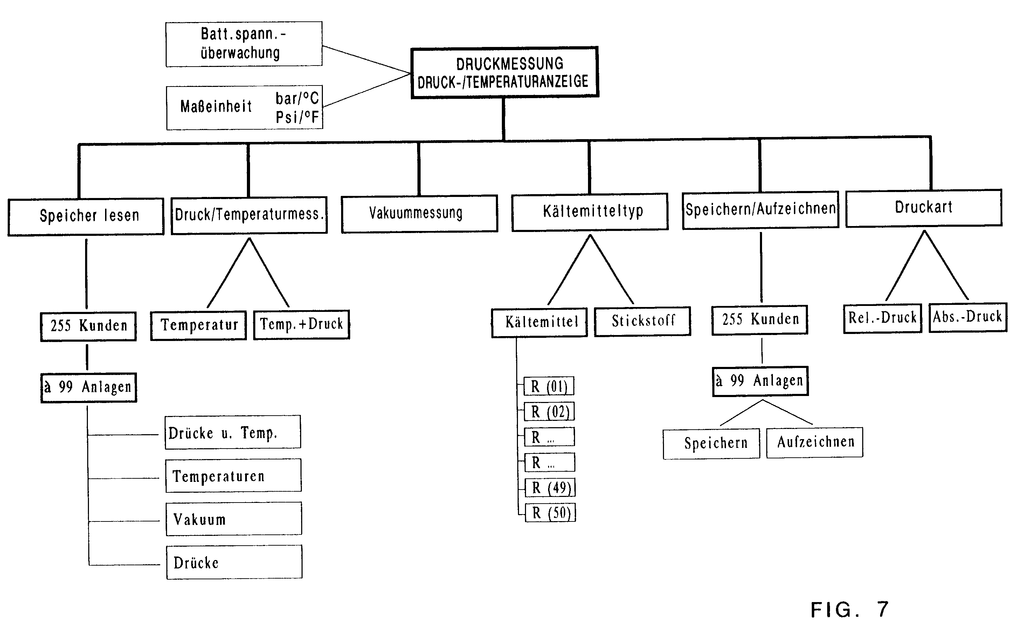

Im folgenden werden die mit der Kontrollarmatur durchführbaren Messungen und Auswertungen unter Bezugnahme auf die Figur 7 näher erläutert.
Nach dem Einschalten der Kontrollarmatur über die ON/OFF-Taste 3a werden sofort die an den beiden Anschlüssen 4 und 6 anliegenden Drücke ermittelt und die jeweiligen Werte in der LCD-Anzeige 2 angezeigt, in der zuletzt festgelegten Maßeinheit. Gleichzeitig erscheinen in der LCD-Anzeige die zuletzt gewählten Einstellungen für die Druckart und den Kältemitteltyp. Als Druckart wird entweder der Relativdruck oder der Absolutdruck angezeigt. Gemessen wird stets der Absolutdruck, für die Anzeige als Relativdruck werden im Mikroprozessor zu dem gemessenen Absolutdruck 1,013 mbar addiert. Die Summe bildet den Relativdruck und wird in der LCD-Anzeige 2 angezeigt. Unabhängig von der vom Bediener gewählten Druckart werden bei Vakuummessungen die Meßwerte immer als Absolutdruck angezeigt. Als Maßeinheiten kann zwischen den Einheiten °C und °F sowie bar und Psi gewählt werden. Zur Ermittlung der Meßdaten ist es notwendig, das in der zu prüfenden Anlage befindliche Kältemittel zu benennen. Ausgehend von dem vorgesehenen Speichervolumen können bis zu 50 verschiedene Kältemitteltypen R (01) bis R (50) erfaßt sein. Sollte das Kältemittel nicht bekannt sein, so kann die Eingabe "Kältemittel unbekannt" R unb. erfolgen und in der LCD-Anzeige werden dann nur die gemessenen Drücke angezeigt, eine Berechnung der zugehörigen Temperaturen ist in diesem Fall nicht möglich. Wird die Kontrollarmatur für das Prüfen der Dichte mittels Überdruck eingesetzt, so wird als Kältemitteltyp "Stickstoff" zur Druckprüfung ausgewählt. Auch in diesem Fall werden keine Temperaturwerte berechnet.
Die vorgenannten Menüpunkte Druckart, Maßeinheit und Kältemitteltyp werden durch Drücken der MODE-Taste 3b angewählt. Die Auswahl der einzelnen Möglichkeiten innerhalb dieser Menüpunkte erfolgt dann jeweils durch Drücken der Pfeiltasten 3c und 3d und wird durch Drücken der Enter-Taste 3f bestätigt.

Unmittelbar nach der Eingabe des in der zu prüfenden Anlage befindlichen Kältemittels und dessen Bestätigung durch Drücken der Enter-Taste 3f wird in der LCD-Anzeige 2 der vom Mikroprozessor 11b ermittelte Wert für die zu den gemessenen Drücken zugehörigen Verdampfungs- bzw. Kondensationstemperaturen angezeigt, in der vom Bediener festgelegten Druckart und Maßeinheit. Die ermittelten Werte werden nach Glättung möglicher Pulsationen derart an das LCD-Display 2 übergeben, daß jederzeit, auch bei schnell wechselnden Werten, eine klare Erkennbarkeit gegeben ist. Dies wird durch Filtern und Mittelwertbildung sowie durch Steuern der Wiederholbarkeit erreicht.
Nach der Beendigung der Prüfung der Anlage wird die Kontrollarmatur durch Betätigen der ON/OFF-Taste 3a ausgeschaltet, wobei die zuletzt festgelegten Einstellungen für die Maßeinheiten, die Druckart und den Kältemitteltyp bis zur nächsten Änderung durch den Bediener erhalten bleiben.
Die gemessenen Druckwerte und die ermittelten Temperaturwerte werden im Programm- und Datenspeicher 11b der Kontrollarmatur abgespeichert. Mittels der MODE-Taste 3b können weitere Untermenüs für zusätzliche Funktionen angewählt und mittels der Enter-Taste 3f bestätigt werden. Es handelt sich dabei um die Untermenüs "Vakuummessung", "Druck-/Temperaturmessung", "Speichern/Aufzeichnen"' und "Speicher lesen", wie in Fig. 7 dargestellt.

### Vakuummessung:

Hierzu ist es notwendig, den Druckmeßwertaufnehmer gemäß Fig. 4, wie bereits erläutert, an den zu kontrollierenden Kreislauf oder Behälter anzuschließen. Nunmehr können Unterdrücke in dem für den Kältetechniker relevanten Bereich mit sehr hoher Genauigkeit gemessen werden. Ab Drücken von 0,1 bar abwärts werden die gemessenen Werte in der LCD-Anzeige 2 angezeigt. Der maximale Meßfehler beträgt ± 0,0001 bar. Neben dem gemessenen Druck wird gleichzeitig in der LCD-Anzeige 2 die zu dem gemessenen Druck zugehörige Dampftemperatur von Wasser angezeigt, die vom Mikroprozessor ermittelt wird. Der Bediener kann so aufgrund des Vergleiches mit der Umgebungstemperatur feststellen, ob der vorhandene Unterdruck für das Evakuieren und Trocknen des Kältekreislaufes ausreichend ist.

### Druck-/Temperaturmessung:

Für Kontroll- und Einstellaufgaben an kältetechnischen Systemen ist neben der Kenntnis der Drücke und der dazugehörigen Verdampfungs- bzw. Kondensationstemperatur die tatsächliche Temperatur des gasförmigen und/oder flüssiggasförmigen Kältemittels von Bedeutung. Hierzu ist es erforderlich, einen externen Fühler vom Typ K, der an der dafür vorgesehenen Stelle des Kältemittelkreislaufes angelegt wird, an die Kontrollarmatur anzuschließen, und zwar über den Anschluß 8. Nach Bestätigung dieses Menüpunktes mittels der Enter-Taste 3f kann der Bediener durch Drücken der Pfeiltasten 3c bzw. 3d zwischen den beiden Einstellungen wählen: "Temperatur" oder "Temperatur P-Eingang blau und Temperatur P-Eingang rot". Die Einstellung Temperatur bedeutet nur die Messung einer Temperatur mittels des externen Fühlers und deren Anzeige im Display 2. Bei der zweiten Einstellung werden neben der Temperatur noch der jeweilige Druck an den Anschlüssen 4 oder 6 gemessen und die zu den gemessenen Drücken zugehörigen Verdampfungs- bzw. Kondensationstemperaturen ermittelt und die Werte in der LCD-Anzeige 2 angezeigt. Dabei bedeuten "P-Eingang blau" Druckmessung am Anschluß 4 der Niederdruckseite und "P-Eingang rot" Druckmessung am Anschluß 6 der Hochdruckseite. Die Kennzeichnung "rot" steht für hohe Drücke und die Kennzeichnung "blau" für niedrige Drücke. Diese Kennzeichnungen sind für die spätere Verarbeitung der Werte mittels der Software für die PC-Anwendung von Bedeutung.

### Speichern/Aufzeichnen:

Durch Drücken der MODE-Taste 3b gelangt der Bediener zu diesem Menüpunkt. Er hat die Wahl zwischen 255 Kunden mit jeweils 99 Anlagen, die durch Betätigung der Pfeiltasten 3c bzw. 3d angewählt werden können und in der ersten Zeile der LCD-Anzeige 2 erscheinen. In der zweiten Zeile der LCD-Anzeige 2 wird angezeigt, ab welchem Kunden/Anlage bisher keine Daten abgespeichert wurden. Die vom Bediener gewünschte Auswahl des Kunden bzw. der Anlage ist mittels der Enter-Taste 3f zu bestätigen. Im nachfolgenden Programmschritt kann zwischen "Speichern" und "Aufzeichnen" unterschieden werden, durch Drücken der Pfeiltaste 3c bzw. 3d. Wird durch Drücken der Pfeiltaste 3d der Menüpunkt Aufzeichnen aufgerufen, so wird gleichzeitig neben den Informationen zum Kunden bzw. zur Anlage noch die vorhandene Batteriekapazität angezeigt, sofern es sich um eine mobile Kontrollarmatur gemäß der Fig. 1 handelt. Im weiteren kann mittels der Pfeiltasten 3c und 3d das gewünschte Zeitintervall zwischen einer und 59 Minuten ausgesucht werden. Nach Bestätigung der Anzeige mittels der Enter-Taste 3f startet die Aufzeichnung für den zuvor aufgerufenen Kunden bzw. Anlage im angewählten Zeitintervall. Nach Beendigung dieses Vorganges wird die Fehlerfreiheit bestätigt oder es werden mögliche Störungen angezeigt. Während des Aufzeichnens wird das "automatische Abschalten" der Kontrollarmatur, das jeweils nach 10 Betriebsminuten erfolgt, unterdrückt. Durch die an den Mikroprozessor 11b angeschlossenen Echtzeituhr 11g wird sichergestellt, daß alle Daten zeitrelevant über den Adreßbuslatch 11e den angewählten Kunden bzw. Anlagen zugeordnet werden.

### Speicher lesen:

Durch Anwählen dieses Menüpunktes mittels der MODE-Taste 3b können sämtliche gespeicherten Meßdaten mit Datums- und Uhrzeitangabe für einen Kunden bzw. eine Anlage abgefragt werden. Die Auswahl des Kunden/Anlage erfolgt analog wie beim Menüpunkt Speichern/Aufzeichnen beschrieben. Nach Anwahl mittels der Pfeiltasten 3c bzw. 3d und der Bestätigung durch Drücken der Enter-Taste 3f werden die entsprechenden Werte in der LCD-Anzeige 2 angezeigt, wobei infolge der beschränkten Anzeigekapazität der Bediener durch Pfeile im Anzeigendisplay informiert wird, falls weitere Werte für die angewählte Meßart vorhanden sind. Durch "Blättern" mittels der Pfeiltasten 3c und 3d erscheinen diese Werte dann nacheinander im Anzeigendisplay 2.

Zu jedem Betriebszeitpunkt der Kontrollarmatur kann der Bediener durch Drücken der Manometer-Taste 3e wieder in den Ausgangsstatus der Druckmessung zurückgelangen.

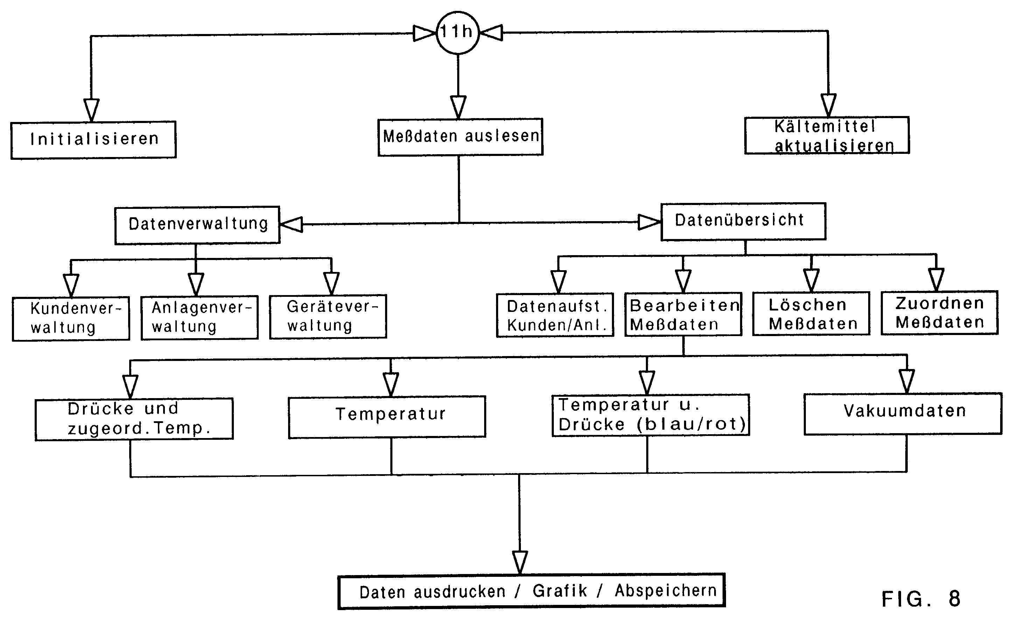

Im folgenden werden die Funktionen der Kontrollarmatur nach dem Anschluß der Kontrollarmatur mittels eines Schnittstellenkabels zwischen der Schnittstelle 11h bzw. dem Anschluß 8 und einer standardisierten PC-Schnittstelle an einem Personalcomputer erläutert, unter Bezugnahme auf das in Fig. 8 dargestellte Programmablaufschema. Es können folgende Hauptanwendungsschritte vorgenommen werden: Initialisieren der Kontrollarmatur, Meßdaten auslesen und Kältemittel aktualisieren. Als Erstes kann die Kontrollarmatur unverwechselbar initialisiert und verwaltet sowie an die Anforderungen des Bedieners angepaßt werden. Mittels der Anwendung "Kältemittel aktualisieren" können abgespeicherte Kältemitteldaten, die nicht mehr benötigt werden, gelöscht werden. Mittels Updates können die Kenndaten neu auf dem Markt befindlicher Kältemittel im Speicher 11d der Kontrollarmatur abgespeichert werden, so daß auch eine Arbeitsweise der Kontrollarmatur für diese neuen Kältemittel gewährleistet ist. Wie bereits erwähnt, können in dem Speicher der Kontrollarmatur die Daten von bis zu 50 Kältemitteln abgespeichert werden. Die Anwendung "Meßdaten auslesen" ermöglicht es, über den PC eine Datenverwaltung oder Datenübersicht zu erstellen. Die Übergabe der Daten der Kontrollarmatur an den PC erfolgt stets in den physikalischen Einheiten unter denen die Werte gespeichert bzw. aufgezeichnet wurden. Mittels der Datenverwaltung können die jeweils vorliegenden Angaben zu den Kunden, den geprüften Anlagen und den eingesetzten Kontrollarmaturen aufbereitet werden. Auch die gerätetechnischen Angaben der Kontrollarmatur, der Name des jeweiligen Bedieners und der Zeitpunkt des letzten Datentransfers mit der betreffenden Kontrollarmatur können als sogenannte Geräteverwaltung erfaßt werden.
Die "Datenübersicht" ermöglicht eine Aufstellung der vorhandenen Daten für die Kunden und Anlagen, eine Bearbeitung der Meßdaten, das Löschen der Meßdaten und das Zuordnen der Meßdaten. Die Datenaufstellung kann als Gesamtübersicht erfolgen, wobei alle ausgelesenen und bereits im Programm gespeicherten Daten geordnet nach Kunden und Anlagen aufgelistet sind. Den nach Nummern geordneten Kunden bzw. Anlagen kann der Bediener weitere Angaben zu Namen, Anschriften und Bezeichnungen zuordnen. Alle über den PC eingegebenen Angaben werden automatisch an alle folgenden Dokumente übergeben. Zu einer in der Gesamtübersicht angegebenen Anlage eines Kunden können in einer untergeordneten Übersicht sämtliche aufgenommenen Werte zu dieser Anlage zusammengefaßt dargestellt werden. Auf dem Monitor des PC werden die Daten zu dem angewählten Datum angezeigt. Die Bezeichnungen und die Zuordnung als auch der Meßort können aus Vorgaben ausgesucht oder frei eingegeben werden, was auch für alle weiteren Darstellungen gilt. An Hand der zur Verfügung stehenden Datenübersichten für die jeweilige Anlage kann der Bediener bereits eine Einschätzung zum allgemeinen Betriebszustand der Anlage vornehmen.
Wurden mit der Kontrollarmatur die Drücke an den Anschlußstellen 4 und 6 gemessen und die zu diesen Drücken gehörenden Verdampfungs- bzw. Kondensationstemperaturen ermittelt und gespeichert, so können diese tabellarisch oder grafisch dargestellt werden, z.B. untergliedert nach Datum, Zeit, Kältemittel, Druckart, gemessener Druck, und zugehörige Temperatur, wobei letztere für die jeweiligen Meßpunkte, wie Eingang Verdichter und Ausgang Verdichter, angegeben sind. Die entsprechenden Dokumente können auch ausgedruckt oder für spätere Vergleiche im PC gespeichert werden.
Werden mittels des PC die Daten einer stationären Kontrollarmatur ausgewertet, so sind aus den vorgenannten Dokumenten auch die Lauf- oder Stillstandszeiten der Anlage ersichtlich. Der mögliche Vergleich von Daten in größeren Zeitabständen aus vorliegenden Überprüfungen einer Anlage mittels der Kontrollarmatur läßt wichtige Schlußfolgerungen über die Funktionsfähigkeit der Anlage, insbesondere die Regel- und Steuerorgane, zu. Außerdem können diese auch erste Hinweise für mögliche Undichtheiten der Anlage liefern.
Wie aus dem in Fig. 8 gezeigten Schema hervorgeht, können nach Anschluß der Kontrollarmatur an einen PC die im Speicher 11d der Kontrollarmatur erfaßten Daten nach verschiedenen Gesichtspunkten ausgewertet werden. Als gespeicherte Meßdaten liegen die gemessenen Drücke und die dazugehörigen Kondensations- bzw. Verdampfungstemperaturen vor, extern gemessene Temperaturen , Temperaturen und Drücke (mit der Kennzeichnung "rot" oder "blau") und Daten der Vakuummessung. Unter Zuordnung der jeweiligen Meßpunkte und Kältemittel bzw. des Meßortes bei extern gemessenen Temperaturen und unter Zuordnung der technischen Daten zu der jeweiligen Vakuumpumpe und der Umgebungstemperatur stehen dem Bediener verschiedene Auswertemöglichkeiten zur Verfügung. Die Ergebnisse können als Daten auf verschiedenen Form- bzw. Protokollblättern, auch in Form grafischer Darstellungen ausgedruckt und im PC abgespeichert werden. An Hand der vorliegenden Ergebnisse kann der Bediener eine zuverlässige Bewertung des Betriebszustandes der geprüften Anlagen vornehmen.
Während des Anschlusses der Kontrollarmatur an den PC kann der Bediener ausgelesene Daten aus dem Speicher 11d der Kontrollarmatur löschen oder neue Konstanten, Korrekturfaktoren bzw. Temperaturdaten für weitere Kältemittel einlesen.

## Patentansprüche

1. Verfahren zum Messen, Kontrollieren und Auswerten physikalischer Parameter von im Kreislauf geführten gasförmigen und/oder flüssiggasförmigen Druckmedien, insbesondere Kältemittel, unter Verwendung einer Kontrollarmatur, die mit der Hochdruck- und der Niederdruckseite des Kreislaufes verbunden wird und mittels derer mindestens die Drücke des Druckmediums an der Niederdruckseite und/oder Hochdruckseite gemessen und die zu den gemessenen Drücken zugehörigen Verdampfungs- oder Kondensationstemperaturen ermittelt werden, gekennzeichnet durch folgende Verfahrensschritte:
a) die Kenndaten der Kältemittel werden als Konstanten der Zustandsgrößen kritische Temperatur, kritische Dichte und kritischer Druck einschließlich der dazugehörigen Korrekturfaktoren und/oder in Form sämtlicher Temperatur- und Druckwerte der Sattdampftafel elektronisch in der Kontrollarmatur gespeichert,
b) an Hand der gespeicherten Kenndaten für die Kältemittel und der gemessenen Drücke werden mittels eines in der Kontrollarmatur befindlichen Mikroprozessors die zu den gemessenen Drücken zugehörigen Verdampfungs- oder Kondensationstemperaturen berechnet oder ausgewählt und die gemessenen Drücke und die dazugehörigen Verdampfungs- oder Kondensationstemperaturen in einem Display der Kontrollarmatur angezeigt.

2. Verfahren nach Anspruch 1, dadurch gekennzeichnet, daß zur Eingabe und zum Löschen der Kenndaten für die Kältemittel die Kontrollarmatur über eine Schnittstellenverbindung mit einem Personalcomputer verbunden wird.

3. Verfahren nach einem der Ansprüche 1 oder 2, dadurch gekennzeichnet, daß über eine zusätzliche Anschlußstelle der Kontrollarmatur ein weiterer Druckmeßwertaufnehmer angeschlossen wird, der an einem definierten Meßpunkt in den Kreislauf eingebunden wird und mit diesem Unterdrücke gemessen und angezeigt werden und außerdem die zu dem gemessenen Druck zugehörige Dampftemperatur von Wasser ermittelt und angezeigt wird.

4. Verfahren nach einem der Ansprüche 1 oder 2, dadurch gekennzeichnet, daß als weiterer Kältemitteltyp ein Druckmedium für eine Überdruckprüfung in den Speicher der Kontrollarmatur eingelesen wird und nach dem Einleiten dieses Druckmediums in den Kreislauf durch Anwählen des Menüpunktes für dieses Druckmedium, der erzeugte Überdruck während eines definierten Zeitraumes mittels der Kontrollarmatur gemessen wird und die gemessenen Werte angezeigt und/oder abrufbar abgespeichert werden.

5. Verfahren nach einem der Ansprüche 1 bis 4, dadurch gekennzeichnet, daß an die zusätzliche Anschlußstelle der Kontrollarmatur ein externer Temperaturmeßwertfühler angeschlossen wird und als weiterer Parameter nur die tatsächliche Temperatur des Kältemittels an einem definierten Meßpunkt des Kreislaufes gemessen und im Display angezeigt wird.

6. Verfahren nach einem der Ansprüche 1 bis 5, dadurch gekennzeichnet, daß an die zusätzliche Anschlußstelle der Kontrollarmatur ein Temperaturmeßwertfühler angeschlossen wird und nur die tatsächliche Temperatur des Kältemittels an einem definierten Meßpunkt des Kreislaufes angezeigt wird und zusätzlich zum gleichen Meßzeitpunkt die an der Niederdruck- oder der Hochdruckseite des Kreislaufes gemessenen Drücke angezeigt sowie die zu den gemessenen Drücken zugehörigen Verdampfungs- oder Kondensationstemperaturen ermittelt und im Display der Kontrollarmatur angezeigt werden.

7. Verfahren nach einem der Ansprüche 1 bis 6, dadurch gekennzeichnet, daß sämtliche im Display der Kontrollarmatur angezeigten Meßergebnisse und ermittelten Werte abrufbar im Speicher der Kontrollarmatur abgespeichert werden.

8. Verfahren nach einem der Ansprüche 1 bis 7, dadurch gekennzeichnet, daß die erfaßten Meßwerte speichermäßig den jeweiligen geprüften Kälteanlagen sowie den Kunden zeitrelevant zugeordnet werden und abrufbar zur Verfügung stehen.

9. Verfahren nach einem der Ansprüche 1 bis 8, dadurch gekennzeichnet, daß im Speicher der Kontrollarmatur die ermittelten Meßdaten für bis zu 255 Kunden mit jeweils bis zu 99 Anlagen abgespeichert werden und abrufbar sind.

10. Verfahren nach einem der Ansprüche 1 bis 9, dadurch gekennzeichnet, daß sämtlichen Meßdaten der Zeitpunkt der Messung nach Datum und Uhrzeit zugeordnet wird.

11. Verfahren nach einem der Ansprüche 1 bis 10, dadurch gekennzeichnet, daß zu jedem Zeitpunkt während des Betriebszustandes der Kontrollarmatur der Bediener durch Drücken einer definierten Taste wieder in den Ausgangszustand der Druckmessung zurückgelangt.

12. Verfahren nach einem der Ansprüche 1 bis 11, dadurch gekennzeichnet, daß nach der Verbindung der Kontrollarmatur mit dem PC diese initialisiert, verwaltet und an die Anforderungen des Bedieners angepaßt wird.

13. Verfahren nach einem der Ansprüche 1 bis 12, dadurch gekennzeichnet, daß nach der Verbindung der Kontrollarmatur mit dem PC die im Datenspeicher der Kontrollarmatur abgespeicherten Daten auf den PC übertragen werden und in graphischer oder tabellarischer Form ausdruckbar als Datenverwaltung oder Datenübersicht zur Verfügung stehen.

14. Verfahren nach Anspruch 13, dadurch gekennzeichnet, daß mittels der Datenverwaltung die vorliegenden Angaben zu den Kunden, den geprüften Kreisläufen und den eingesetzten Kontrollarmaturen einschließlich der ermittelten Meßergebnisse aufbereitet werden.

15. Verfahren nach einem der Ansprüche 1 bis 14, dadurch gekennzeichnet, daß nach der Verbindung der Kontrollarmatur mit dem PC ausgelesene Daten aus dem Speicher der Kontrollarmatur erforderlichenfalls gelöscht und/oder neue Daten eingelesen werden.

16. Kontrollarmatur für gasförmige und/oder flüssiggasförmige Druckmedien, insbesondere zur Durchführung des Verfahrens nach einem der Ansprüche 1 bis 15, mit mindestens zwei Anschlüssen, wobei der eine Anschluß mit der Hochdruckseite und der andere Anschluß mit der Niederdruckseite der zu prüfenden Anlage verbindbar ist und die einzelnen Anschlüsse für die Kältemittel innerhalb der Kontrollarmatur miteinander verbindbar sind und die einzelnen Anschlüsse mit Mitteln zum Messen des Druckes verbunden sind, dadurch gekennzeichnet, daß die mit der Niederdruck- und der Hochdruckseite verbundenen Anschlüsse (4, 6) mit Druckmeßwertaufnehmern (4', 6') in ständiger Verbindung stehen, und ein zusätzlicher Steckanschluß (8) für den Anschluß eines externen Temperatur- oder Druckmeßwertaufnehmers (9) oder zum Anschluß der Kontrollarmatur an einen PC vorgesehen ist, die Temperatur- und Druckmeßwertaufnehmer (4', 6', 9) an einen Analog/Digital-Wandler (11a) angeschlossen sind, der mit einem Mikroprozessor (11b) verbunden ist, an den mindestens eine Eingabe- (3) und Anzeigeeinheit (2) sowie ein Programm- und Datenspeicher (11d) angeschlossen sind, wobei der Mikroprozessor (11b) über eine Schnittstelle (11h) mit dem Steckanschluß (8) verbunden ist, und im Rahmen eines Ablaufprogrammes mindestens, ausgehend von den im Speicher (11d) enthaltenen Kenndaten für eine Vielzahl an Kältemitteln, die zu dem in der zu prüfenden Anlage eingesetzten Kältemittel und den gemessenen Drücken gehörenden Verdampfungs- oder Kondensationstemperaturen ermittelbar sind, wobei die Kenndaten entweder
a) als Konstanten der Parameter kritische Temperatur, kritische Dichte und kritischer Druck und der dazugehörigen Korrekturfaktoren vorliegen und die jeweilige Temperatur über die thermische Zustandsgleichung berechenbar ist und/oder
b) als Temperatur- und Druckwerte der Sattdampftafel der einzelnen Kältemittel vorliegen, aus denen zu den gemessenen Drücken die dazugehörigen Temperaturen auswählbar sind,
und die Kontrollarmatur an eine Stromversorgungsquelle (11i) anschließbar ist.

17. Kontrollarmatur nach Anspruch 16, dadurch gekennzeichnet, daß der Programm- und Datenspeicher (11d) mit einem Adreßbuslatch (11e), einem programmierbaren Logikbaustein (11c) und einem Ausgabeport (11f) verknüpft ist, die über den Mikroprozessor (11b) steuerbar sind.

18. Kontrollarmatur nach einem der Ansprüche 16 oder 17, dadurch gekennzeichnet, daß an den Mikroprozessor (11b) eine Echtzeituhr (11g) angeschlossen ist.

19. Kontrollarmatur nach einem der Ansprüche 16 bis 18, dadurch gekennzeichnet, daß diese von einem Gehäuse (1) umgeben ist, das elektromagnetisch geschützt ausgerüstet ist und die Eingabeeinheit (3) aus einer ON/OFF-Taste (3a), einer Mode-Taste (3b) zum Anwählen der Menüpunkte Druckart, Maßeinheit und Kältemitteltyp sowie der Untermenüs für die zusätzlichen Funktionen "Vakuummessung", "Druck-/Temperaturmessung", "Speichern/Aufzeichnen" und "Speicher lesen", den Pfeiltasten (3c) "vorwärts" und (3d) "rückwärts" zur Auswahl innerhalb der einzelnen Menüpunkte, einer Manometertaste (3e), um zu jedem Betriebszeitpunkt wieder in den Ausgangsstatus der Druckmessung zurückzugelangen, und einer Enter-Taste (3f) zur Bestätigung der jeweiligen Eingaben, besteht, und die Anzeigeeinheit (2) ein mindestens zweizeiliges LCD-Anzeigenfeld aufweist.

20. Kontrollarmatur nach einem der Ansprüche 16 bis 19, dadurch gekennzeichnet, daß diese als stationäres Kontrollgerät in den Kältekreislauf der Anlage eingebunden ist und zwei Signalleitungsanschlüsse (14) zur Ableitung von Meßwertsignalen an ein externes Gerät aufweist.

21. Kontrollarmatur nach einem der Ansprüche 16 bis 19, dadurch gekennzeichnet, daß diese als mobiles Kontrollgerät ausgebildet ist, und ein weiterer Anschluß (5) für eine Verbindung zu Sammelflaschen, Evakuierungsstationen oder Vakuumpumpen angeordnet ist, der mit den beiden anderen Anschlüssen (4 und 6) für die Niederdruck- und Hochdruckseite in Verbindung steht, und jeder der drei Anschlüsse
(4, 5, 6,)mittels eines Absperrventiles (4a, 5a, 6a) absperrbar ist.

22. Kontrollarmatur nach einem der Ansprüche 16 bis 21, dadurch gekennzeichnet, daß der externe Druckmeßwertaufnehmer (9) von einem Gehäuse (9a) umgeben ist und zur Ermittlung von Unterdrücken bestimmt ist, und an dem Gehäuse (9a) zwei Anschlüsse (9b, 9c) für Füllschläuche angebracht sind, wobei mindestens ein Anschluß (9b oder 9c) mittels eines Ventiles (9d) absperrbar ist und der ventilfreie Anschluß (9b oder 9c) an einen separaten Meßstutzen der Anlage oder an einen Anschluß (5) der Kontrollarmatur anschließbar ist und an den ventilseitigen Anschluß eine Vakuumpumpe angeschlossen ist und der Stecker des Anschlußkabels (9e) mit dem Anschluß (8) der Kontrollarmatur verbunden ist, und im Anzeigendisplay der Kontrollarmatur die mit hoher Meßgenauigkeit gemessenen Unterdrücke und die Dampftemperatur von Wasser entsprechend dem gemessenen Druck anzeigbar sind.
